Europäisches Patentamt

European Patent Office

Office européen des brevets

(19)

(11) Veröffentlichungsnummer : **0 015 914**
**B1**

## (12) EUROPÄISCHE PATENTSCHRIFT

(45) Veröffentlichungstag der Patentschrift :
28.04.82

(21) Anmeldenummer : 79900266.2

(22) Anmeldetag : 07.03.79

(86) Internationale Anmeldenummer :
PCT/CH 79/00036

(87) Internationale Veröffentlichungsnummer :
WO WO/80000 (10.01.80 Gazettee 80/01)

(51) Int. Cl.³ : **G 02 F 1/13**, G 06 F 3/14,
G 01 R 31/02, G 06 F 11/00//
G01G23/37

---

(54) Überwachung von Multisegment-Flüssigkristallanzeige.

---

(30) Priorität : 09.06.78 CH 6301/78

(43) Veröffentlichungstag der Anmeldung :
01.10.80 (Patentblatt 80/20)

(45) Bekanntmachung des Hinweises auf die Patenterteilung : 28.04.82 Patentblatt 82/17

(84) Benannte Vertragsstaaten :
DE FR GB

(56) Entgegenhaltungen :
DE - A - 2 530 999
DE - A - 2 712 398
Electronics, Band 47, Nr. 8, veröffentlicht am 18.
April 1974 (New York),
K.J. Wellington : « Continuous monitor for seven-segment displays », 118
Electronics, Band 49, Nr. 26, veröffentlicht am 23.
Dezember 1976 (New York),
J.P. Oliver, « Priority encoder simplifies clock-to-computer interfaces », 70, 71

(73) Patentinhaber : Mettler Instrumente AG

CH-8606 Greifensee (CH)

(72) Erfinder : STROBEL, Felix
Im Langacker 13
CH-8606 Greifensee (CH)

(74) Vertreter : Jonath, Eberhard et al
Mettler Instrumente AG
CH-8606 Greifensee (CH)

---

Überwachung von multisegment-Flussigkristallanzeige

Die Erfindung betrifft eine ein- oder mehrstellige Multisegment-Flüssigkristallanzeige, insbesondere für Waagen.

Bei allen Multisegment-Anzeigen (die üblicherweise, aber nicht notwendig, als Sieben-Segment-Anzeigen aufgebaut sind) stellt sich das Problem der Funktionsfehlersicherheit, d.h. der Erkennung von Fehlern, die zu einer unzutreffenden Anzeige führen. Es ist in diesem Zusammenhang beispielsweise bekannt, eine Prüftaste vorzusehen, die zu Kontrollzwecken alle Segmente aufleuchten lässt. Diese Massnahme hat den wesentlichen Nachteil, dass sie keine dauernde Kontrolle bildet und Fehlanzeigen nicht mit Sicherheit ausschliesst. Es ist weiterhin bekannt (DE-A-24 21 991), jedes Segment in wenigstens zwei Teilsegmente zu unterteilen, die unabhängig voneinander angesteuert werden. Damit wird bei Ausfall eines Teilsegmentes durch das veränderte Anzeigebild auf den Fehler hingewiesen. Diese Massnahme bedingt jedoch einen nennenswerten Mehraufwand ; ausserdem ist es nicht ganz einfach, die Teilsegmente so auszubilden, dass ein Defekt zu einer deutlich erkennbaren Fehlanzeige führt.

Bei LED-Anzeigen (Leuchtdioden-Anzeigen) ist es möglich, den Segmentstrom zu kontrollieren und auf diese Weise Fehler zu detektieren. Diese Möglichkeit entfällt bei Flüssigkristallanzeigen, deren kleiner Stromverbrauch (im Nanoamperebereich) ja gerade einen wesentlichen Vorzug dieses Anzeigentyps darstellt (unter anderem wegen der geringen Wärmeverluste).

Aus einer nach dem Durchgangsprinzip arbeitenden Ueberwachungsschaltung für mehrstellige LED-Anzeigen ist es ferner bekannt, den einzelnen Dezimalen Torschaltungen zuzuordnen, die über eine allen Dezimalen gemeinsame Torschaltung an einen letzterer nachgeordneten Fehlermelder angeschlossen sind (Electronics, Band 47, n° 8/1974, Seite 118).

Die vorliegende Erfindung entstand aus der Aufgabe, eine ein- oder mehrstellige Multisegment-Flüssigkristallanzeige unter Verzicht auf eine Segmentaufteilung funktionsfehlersicher zu machen, d.h. eine Massnahme zu treffen, um einen Ausfall eines Segmentes automatisch und deutlich erkennbar werden zu lassen. Zur Lösung dieser Aufgabe wird erfindungsgemäss eine Schaltung zur Ueberwachung der Spannungsänderung im Signalverlauf angesteuerter Segmente vorgeschlagen. Die Ueberwachungsschaltung geht von den Eigenschaften der Flüssigkristallanzeige aus und führt eine Kontrolle der Spannungs-/Zeitkennlinie des vom Segment einerseits und von der Gegen- oder Rückelektrode andererseits gebildeten Kondensators durch.

Die Verwirklichung dieses Prinzips ist auf verschiedene Arten möglich. So kann beispielsweise eine sequentielle Kontrolle vorgenommen werden derart, dass die einzelnen Segmente periodisch nacheinander mit einer Referenzinformation verglichen werden. Bevorzugt wird eine Ausführungsform der Erfindung, bei der die Schaltung eine die zu überwachenden Segmente im Rhythmus von deren Anzeigeansteuerung kontrollierende Torschaltung und einen dieser nachgeordneten Fehlermelder umfasst. Diese Ausführungsform erlaubt eine gleichzeitige Kontrolle aller überwachten Segmente und läuft im Hinblick auf die relativ kurzen Ansteuerungsintervalle praktisch auf eine permanente Ueberwachung hinaus. Mit dieser Massnahme ist gewährleistet, dass ein Defekt in einer Segmentleitung praktisch sofort erkannt wird.

Eine weitere, nicht allzu seltene Fehlermöglichkeit sind Kurzschlüsse zwischen zwei benachbarten Segmente. Um auch solche Fehler zu erkennen, sieht eine zweckmässige Weiterbildung vor, dass benachbarte Segmente mit den Eingängen verschiedener Tore der Torschaltung verbunden sind.

In der Regel handelt es sich bei den hier betrachteten Anzeigen um solche mit mehreren Dezimalen. In diesen Fällen wäre es möglich, jeder Dezimale einen eigenen Fehlermelder zuzuordnen. Um den damit verbundenen, normalerweise entbehrlichen Mehraufwand zu vermeiden, ist vorzugsweise den Torschaltungen der einzelnen Dezimalen eine weitere, gemeinsame Torschaltung nachgeordnet, welcher ein für alle Dezimalen gemeinsamer Fehlermelder nachgeschaltet ist ; zweckmässigerweise ist dabei die weitere Torschaltung ein NAND-Gatter und/oder ein NOR-Gatter mit Inverter. Mit dieser Massnahme ist ein zusätzlicher Vorzug verbunden, erlaubt sie es doch, zufällig gleichzeitig auftretende Ausfälle von je einem Segment in zwei oder mehr verschiedene Dezimalen zu detektieren und zu melden. Das durch die Erfindung in erster Linie zu erfüllende Prinzip der einfachen Funktionsfehlersicherheit verlangt nur, dass ein einzelner auftretender Fehler erkannt wird, und nimmt den sehr viel weniger wahrscheinlichen Fall in Kauf, dass zwei Defekte gleichzeitig auftreten und durch die Gleichzeitigkeit unerkannt bleiben. Die zuletzt genannte Variante der Erfindung ermöglicht also eine über die beschriebene Anforderung hinausgehende Funktionsfehlersicherheit.

Zweckmässigerweise ist eine Taste zur Prüfung der Funktion des Ueberwachungsschaltung vorgesehen.

Bei den üblichen Sieben-Segment-Anzeigen sind nicht immer alle Segmente gleich kritisch. Jedenfalls bei der Anzeige von Zifffern führt der Ausfall bestimmter Segmente bereits zu einer eindeutig als falsch bzw. unzutreffend erkennbaren Anzeige. In diesem und ähnlichen Fällen ist zur Vereinfachung der Schaltung eine Ausführungsform zweckmässig, bei der nur solche Segmente an die Ueberwachungsschaltung angeschlossen sind, deren Ausfall eine Mehrdeutigkeit der Anzeige bewirkt.

Nachstehend werden Ausführungsbeispiele der Erfindung anhand der Zeichnung näher erläutert. In der Zeichnung sind

Figur 1 die Darstellung einer einstelligen Sieben-Segment-Anzeige mit Ueberwachungsschaltung,

Figur 2 die Darstellung einer mehrstelligen Sieben-Segment-Anzeige mit Ueberwachungsschaltung, und

Figur 3 die Darstellung des Signalverlaufs der wesentlichen Elemente.

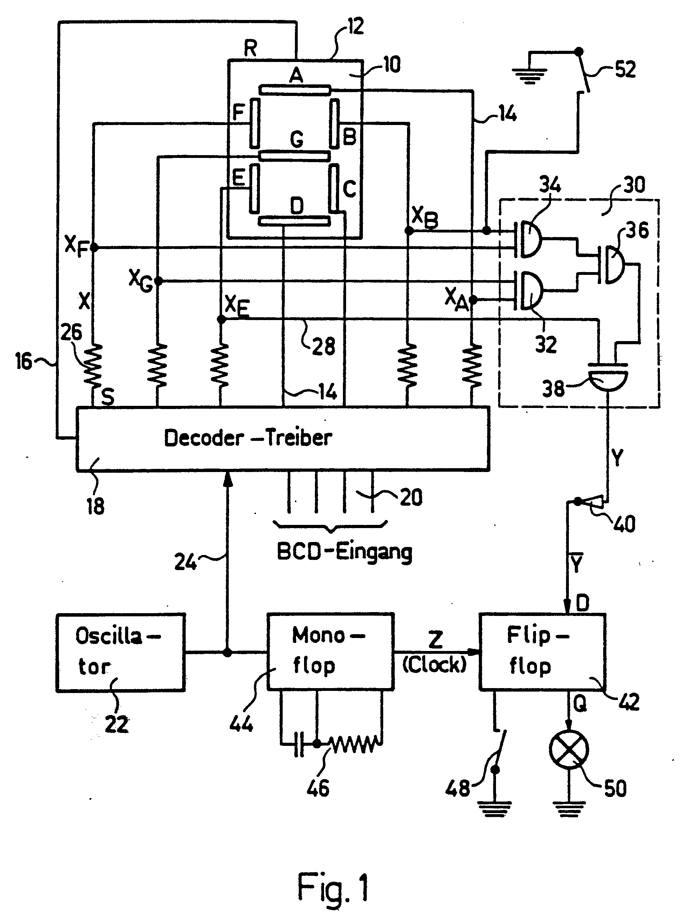

Die einstellige Flüssigkristall-Anzeige 10 der Figur 1 umfasst sieben Segmente (Elektroden) A...G sowie eine gemeinsame, mit R bezeichnete Rückelektrode 12. Die einzelnen Segmente sind über Leitungen 14 und die Rückelektrode 12 ist über eine Leitung 16 mit einem Decoder-Treiber 18 verbunden. Der anzuzeigende Messwert gelangt digital über einen BCD-Eingang 20 zum Decoder-Treiber 18.

Die Anordnung wird in bekannter Weise von einem Oszillator 22 über eine Leitung 24 mit Wechselspannung betrieben. In regelmässigen Intervallen werden z.B. alle aus den Segmenten A...G einerseits und der gemeinsamen Rückelektrode 12 andererseits bestehenden Kondensatoren umgeladen und ergeben so das leuchtende Anzeigebild « 8 ». Bei anderen anzuzeigenden Ziffern (oder Symbolen) werden selektiv nur die entsprechenden Segmente vom Decoder-Treiber 18 angesteuert.

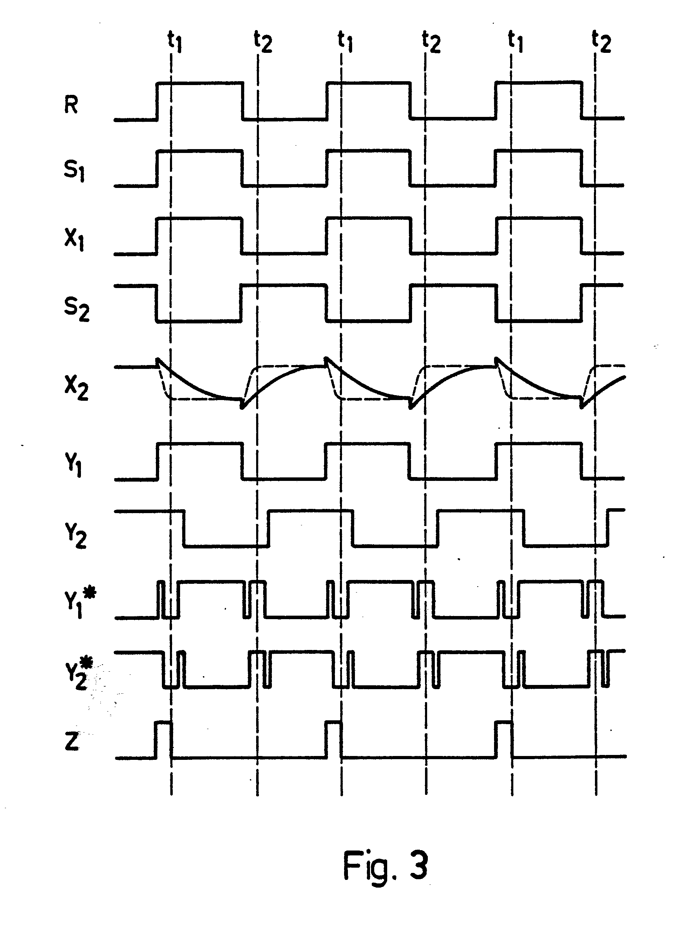

In Figur 3 sind die Signalverläufe erkennbar. Die vom Oszillator 22 gelieferte Rechteck-Wechselspannung von beispielsweise 100 Hz ergibt den mit R bezeichneten Spannungsverlauf an der Rückelektrode 12. Die gleiche Kurvenform, mit $S_1$ bezeichnet, hat der Spannungsverlauf S an nicht angesteuerten Segmenten, d.h. zwischen diesen Segmenten und der Rückelektrode 12 besteht keine Spannung. Für angesteuerte Segmente gilt der umgekehrte Verlauf, mit $S_2$ bezeichnet : Hier besteht eine in jeder Periode zweimal die Polarität wechselnde Spannung zwischen Segment und Rückelektrode 12.

Die bis hierher konventionelle Anordnung ist nun wie folgt modifiziert. In den zu den Segmenten A, B, E, F und G führenden Leitungen 14 ist je ein Hilfswiderstand 26 eingesetzt. Zwischen diesem und dem zugehörigen Segment führt jeweils eine Zweigleitung 28 zu einer Torschaltung 30, bestehend aus vier Exklusiv-NOR (NICHT-ODER-)-Gattern 32, 34, 36 und 38. Der Ausgang der Torschaltung 30 ist an einen Inverter 40 und dessen Ausgang an den Setzeingang eines bistabilen Multivibrators (D-Flipflops) 42 geführt. Zwischen den Oszillator 22 und den Takteingang des Flipflop 42 ist ein monostabiler Multivibrator (Monoflop) 44 mit einstellbarer Pulsbreite (RC-Glied 46) geschaltet. Ferner ist am Rücksetzeingang des Flipflop 42 eine Rückstelltaste 48 vorgesehen, und von seinem Q-Ausgang wird eine Kontroll-lampe 50 angesteuert.

Wie aus Figur 3 ersichtlich ist, entspricht der Signalverlauf $X_1$ (Rechteckspannung bei nicht angesteuertem Segment) demjenigen von $S_1$. Ist ein Segment dagegen angesteuert, so ergibt sich der Signalverlauf $X_2$. Im Normalfall, d.h. bei intaktem Segment, folgt die allmähliche Spannungsänderung aus dem Ladevorgang des Kondensators Segment/Rückelektrode der ausgezogenen Linie. Ist dagegen ein Segment defekt (Leitungsunterbrechung), so ergibt sich ein bedeutend rascherer Pegelwechsel bei $X_2$ (gestrichelte Linie). Dieses Phänomen erlaubt es, durch Kontrolle des Pegels von $X_2$ zum Zeitpunkt $t_1$ oder $t_2$ das richtige Funktionieren des Segmentes zu prüfen. Die Zeitspanne zwischen einer Flanke der Rechteckspannung und $t_1$ bzw. $t_2$ ist empirisch zu ermitteln, sie beträgt beispielsweise einige Mikrosekunden.

Die beschriebene Ausführungsform prüft die Funktion der Anzeige im Zeitpunkt $t_1$. In diesem Zeitpunkt haben die Signalleitungen $X_A$, $X_B$, $X_E$, $X_F$ und $X_G$ für alle intakten Segmente, ob angesteuert oder nicht, hohen Pegel (Kurven $X_1$ bzw. $X_2$), d.h. das Ausgangssignal der Torschaltung 30 hat ebenfalls hohen Pegel (das gleiche gilt, wenn alle Signalleitungen tiefen Pegel haben). Je nachdem, ob eine gerade oder ungerade Anzahl Segmente aktiviert ist, ergibt sich dabei der Signalverlauf $Y_1$ (Pegel bei $t_1$ schon hoch) oder $Y_2$ (Pegel bei $t_1$ noch hoch). Liegt ein Fehler vor, so geschieht der Spannungspegelwechsel gemäss $X_2$ in Figur 3 rascher, und im Prüfzeitpunkt liefert die Torschaltung 30 ein Fehlersignal $Y^*$ von niedrigem Pegel (Kurven $Y^*_1$ bzw. $Y^*_2$).

Der Monoflop liefert in jeder Periode der Oszillatorfrequenz einen Rechteckimpuls Z, dessen fallende Flanke den Zeitpunkt $t_1$ bildet (RC-Glied 46) und der am Takteingang des Flipflop 42 anliegt. Weist nun zum Zeitpunkt $t_1$ der Setzeingang des Flipflop 42 hohen Pegel auf (Fehlersignal $Y^*$, invertiert im Inverter 40), so wird vom Q-Ausgang die Fehlermeldelampe 50 angesteuert. Letztere kann durch Rücksetzen des Flipflop 42 mittels der Taste 48 manuell (oder mit Hilfe eines Zeitgliedes automatisch) wieder gelöscht werden.

Die beschriebene Anordnung prüft durch Erzeugung des Vergleichs-Bits Y selbsttätig die Segmente auf richtiges Funktionieren. Darüber hinaus detektiert sie durch die spezielle Kombination der Leitungen 28 mit der Torschaltung 30 auch noch Kurzschlüsse zwischen benachbarten Segmenten (Segmente A und G zum Tor 32, Segmente B und F zum Tor 34), die sonst eventuell verborgen bleiben könnten.

Mit einer Prüftaste 52 kann die Funktion der Ueberwachungsschaltung kontrolliert werden : Die Taste ist zwischen der Leitung 28 des Segmentes B und Erde eingefügt. Wird sie geschlossen, so erhält der betreffende Eingang des Tores 34 niedrigen Pegel, es resultiert ein künstliches Fehlersignal und die Lampe 50 muss aufleuchten, bis der Schalter 52 wieder geöffnet und die Rücksetzung 48 betätigt wird. Tut sie es nicht, so liegt ein Defekt in der Ueberwachungsschaltung vor (Torschaltung 30, Inverter 40, Flipflop 42 oder Lampe 50).

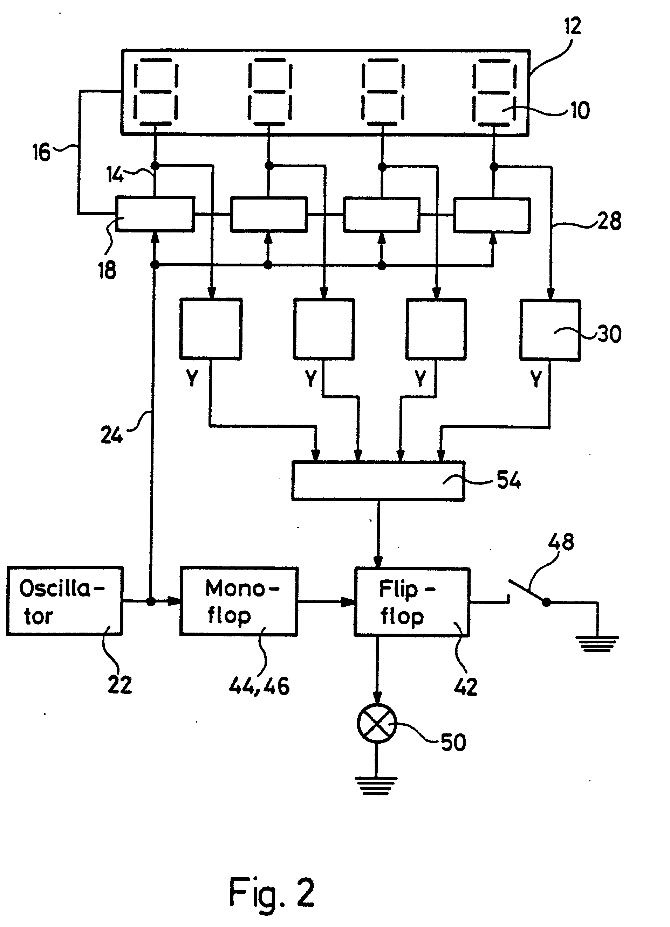

Die obige ausführliche Beschreibung bezog sich auf eine einstellige Anzige. Nachstehend soll noch anhand der Figur 2 der weitaus häufigere Fall der mehrstelligen Anzeige erläutert werden. Da der Aufbau der Anordnung mit demjenigen der Figur 1 weitgehend übereinstimmt, sind insoweit auch die gleichen Bezugszeichen verwendet worden.

Einer gemeinsamen Rückelektrode 12 sind vier Anzeigestufen 10 zugeordnet, die über Leitungen 14 von vier Decoder-Treiber-Stufen 18 simultan angesteuert werden (gemeinsamer Oszillator 22). Jede Anzeigestufe 10 ist über Leitungen 28 mit einer Torschaltung 30 verbunden. Dem Oszillator 22 ist ferner wieder ein einstellbarer Monoflop 44, 46 und diesem ein Flipflop 42 mit Rückstelltaste 48 nachgeschaltet.

Die bisher beschriebenen Elemente sind genau gleich aufgebaut wie in der Anordnung von Figur 1. Unterschiedlich ist die Rückelektrode 12 (hier gemeinsam für alle Anzeigestufen 10 ; genau so könnte jeder Anzeigestufe eine eigene Teil-Rückelektrode zugeordnet sein). Ferner sind Takt-Leitungen 24 zu den einzelnen Decoder-Treiber-Stufen 18 vorgesehen. Die Datenleitungen zu letzteren (BCD-Eingänge) wurden nicht eingezeichnet.

Die einzelnen Ausgänge Y der Torschaltungen 30 werden hier nicht invertiert, sondern direkt einer NAND-(NICHT-UND-) Torschaltung 54 zugeführt, deren Ausgang am Setzeingang des Flipflop 42 anliegt. Diese Anordnung funktioniert im Prinzip genau gleich wie diejenige nach Figur 1, und auch die Signalverläufe in Figur 3 treffen zu. Stets werden alle Segmente aller Dezimalen 10 gleichzeitig überprüft. Ergänzend zu bemerken ist jedoch, dass die Ueberwachungsschaltung durch Verwendung des NAND-Tores 54 auch dann ein Fehlersignal abgibt, wenn sich gleichzeitig in mehreren Dezimalen ein Ausfall bzw. ein Kurzschluss ereignen sollte.

Natürlich wäre es, falls erwünscht, auch möglich, bei Inkaufnahme des grösseren Aufwandes jeder Dezimalstelle eine eigene Kontrollampe zuzuordnen.

Analog zur in Figur 1 gezeigten Prüftaste kann auch hier eine Prüfmöglichkeit vorgesehen sein. Je nach den vorliegenden Anforderungen kann man sich dabei auf die Prüfung nur der Kontrollampe 50 beschränken, auch die Torschaltung 54 oder aber auch alle Torschaltungen 30 mittels einer oder mehrerer Prüftasten in die Kontrolle einbeziehen.

Die vorliegende Erfindung ist besonders von Bedeutung für die Anzeigen von Waagen, kann aber überall dort vorteilhaft angewendet werden, wo die sofortige Erkennung von Fehlern in Flüssigkristallanzeigen wichtig ist.

Beispielsweise bei Waagen kann vorzugsweise auch die Anzeige des Vorzeichens, so vorhanden, und/oder des Dezimalpunktes auf entsprechende Weise in die Ueberwachungsschaltung einbezogen werden.

Für Ziffernanzeigen genügt regelmässig die oben dargestellte Kontrolle der fünf Segmente A, B, E, F und G, da der Ausfall der Segmente C oder D keine Fehlinterpretationen von Ziffernanzeigen provoziert. Sollen jedoch alle Segmente überwacht werden, beispielsweise wiel noch andere Symbole (Buchstaben u.a.) angezeigt werden sollen, so sind die Leitungen 14 der Segmente C und D mit dem Hilfswiderstand 26 zu ergänzen und ist die Torschaltung 30 entsprechend zu erweitern.

Gemäss dem Ausführungsbeispiel wird zum Zeitpunkt $t_1$ die Kontrolle vorgenommen. In gleicher Weise ist der Zeitpunkt $t_2$ geeignet. Es müsste in diesem Falle lediglich das NAND-Tor 54 in Figur 2 durch ein NOR-Tor mit nachfolgendem Inverter ersetzt und der Monoflop 44, 46 zur Bildung des Zeitpunktes $t_2$ verwendet werden.

Ferner wäre es möglich, die Kontrolle in beiden Zeitpunkten ($t_1$ und $t_2$) vorzunehmen. Es wären hierzu in Figur 2 ein weiterer Monoflop 44, 46 sowie ein weiterer Flipflop 42 und neben dem NAND-Tor 54 ein NOR-Tor mit Inverter vorzusehen, wobei letzteres ebenfalls von allen Signalen Y beaufschlagt würde und dem weiteren Flipflop vorgeschaltet wäre. Dem Mehraufwand stünde der Vorteil gegenüber, dass eine gewisse automatische Kontrolle der Tore 30 stattfände.

Statt einer Kontrollampe 50 kann auch ein Blinken der Anzeige im Fehlerfall vorgesehen sein.

Die erfindungsgemässe Methode erlaubt eine zeitgesteuerte, selbsttätige Ueberwachung, die die am häufigsten auftretenden Funktionsfehler zuverlässig erkennen lässt.

### Ansprüche

1. Ein- oder mehrstellige Multisegment-Flüssigkristall-Anzeige, gekennzeichnet durch eine Schaltung zur Ueberwachung der Spannungsänderung im Signalverlauf ($X_2$) angesteuerter Segmente.

2. Anzeige nach Anspruch 1, dadurch gekennzeichnet, dass die Schaltung eine die zu überwachenden Segmente im Rhythmus von deren Anzeigeansteuerung kontrollierende Torschaltung (30) und einen dieser nachgeordneten Fehlermelder (42, 50) umfasst.

3. Anzeige nach Anspruch 2, dadurch gekennzeichnet, dass benachbarte Segmente mit den Eingängen verschiedener Tore der Torschaltung (30) verbunden sind.

4. Mehrere Dezimalen umfassende Anzeige nach Anspruch 2 oder 3, dadurch gekennzeichnet, dass den Torschaltungen der einzelnen Dezimalen (30) eine weitere, gemeinsame Torschaltung (54) nachgeordnet ist, welcher ein für alle Dezimalen gemeinsamer Fehlermelder (43, 50) nachgeschaltet ist.

5. Anzeige nach Anspruch 4, dadurch gekennzeichnet, dass die weitere Torschaltung (54) ein NAND-Gatter und/oder ein NOR-Gatter mit Inverter ist.

6. Anzeige nach einem der Ansprüche 2-5, dadurch gekennzeichnet, dass eine Taste (52) zur Prüfung der Funktion der Ueberwachungsschaltung vorgesehen ist.

7. Anzeige nach einem der vorangehenden Ansprüche, dadurch gekennzeichnet, dass nur solche Segmente an die Ueberwachungsschaltung angeschlossen sind, deren Ausfall eine Mehrdeutigkeit der Anzeige bewirkt.

## Claims

1. Liquid crystal display with a plurality of segments, for one or more digits, characterized by a circuit for monitoring the voltage change of the signal curve $(X_2)$ of activated segments.

2. Display as in claim 1, characterized in that the circuit comprises a gate circuit (30) controlling the segments to be monitored in synchronism with their activation and an error signal generating circuit (42, 50) connected downstream of the gate circuit.

3. Display as in claim 2, characterized in that adjacent segments are connected to the inputs of different gates of the gate circuit (30).

4. Display as in claim 2 or claim 3, comprising a plurality of digits, characterized in that downstream the gate circuits (30) of the individual digits there is provided an additional, common gate circuit (54) which is followed by an error signal generating circuit (43, 50) common to all digits.

5. Display as in claim 4, characterized in that the additional gate circuit (54) comprises a NAND-gate and/or a NOR-gate with an inverter.

6. Display as in one of the claims 2 to 5, characterized by a key (52) for testing the function of the monitoring circuit.

7. Display as in one of the claims 1 to 6, characterized in that only such segments are connected to the moniroting circuit whose failure causes the display to become ambiguous.

## Revendications

1. Affichage par cristaux liquides, à un ou plusieurs chiffres, de segments multiples, caractérisé par un montage pour surveiller la variation de la tension dans le tracé de signal $(X_2)$ de segments dirigés.

2. Affichage suivant la revendication 1, caractérisé en ce que le montage comprend un circuit de portes (30) qui contrôle les segments à surveiller au rythme de leur incitation à afficher, et un avertisseur d'erreurs (42, 50) qui lui est subordonné.

3. Affichage suivant la revendication 2, caractérisé en ce que des segments voisins sont reliés aux entrées de différentes portes du circuit de portes (30).

4. Affichage suivant l'une des revendications 2 et 3 comprenant plusieurs chiffres, caractérisé en ce qu'aux circuits de portes (30) des chiffres individuels est subordonné un circuit de portes supplémentaire commun (54) auquel est associé un avertisseur d'erreurs (43, 50) commun à tous les chiffres.

5. Affichage suivant la revendication 4, caractérisé en ce que le circuit de porte supplémentaire (54) comporte une porte NON-ET et/ou une porte NON-OU avec inverseur.

6. Affichage suivant l'une des revendications 2 à 5, caractérisé en ce qu'une touche (52) est prévue pour vérifier le fonctionnement du système de surveillance.

7. Affichage suivant l'une des revendications 1 à 6, caractérisé en ce que ne sont reliés au système de surveillance que des segments dont la défaillance provoque une ambiguïté de l'affichage.

0 015 914

Fig. 1

Fig. 2

Fig. 3